# EUROPEAN PATENT SPECIFICATION

(11) **EP 2 289 614 B1**
(45) Date of publication and mention of the grant of the patent: **26.04.2017**
(21) Application number: 10007379.0
(22) Date of filing: 16.07.2010
(51) Int. Cl.: B01J 2/00, B01J 2/12

(54) **Apparatus for coating cores provided with a perforated drum and method for coating cores**
Vorrichtung zur Beschichtung von Kernen, die mit einer perforierten Trommel versehen ist, und Verfahren zur Beschichtung von Kernen
Appareil de revêtement de granules équipé d'un tambour perforé et procédé de revêtement de granules

(30) Priority: 20.07.2009 IT MI20091281
(43) Date of publication of application: 02.03.2011
(73) Proprietor: Nicomac S.r.l., 20060 Liscate (MI) (IT)
(72) Inventor: Nigris, Tomaso, 20133 Milano (IT)
(74) Representative: Bottero, Claudio

(56) References cited:
- EP-A1- 0 382 160
- EP-A2- 0 717 932
- DE-U1- 20 211 171
- US-A- 5 507 868

## Description

### Background of the invention

The present invention relates to an apparatus for coating cores provided with a perforated drum in which said cores are housed in form of a loose mass.

This invention also relates to a method for coating cores which may be carried out by means of the aforementioned coating apparatus provided with a motorised perforated drum.

In the following description and in the appended claims, the term "core", is used to indicate any material in particles or in granules such as for example variously shaped tablets, substantially spherical pellets or sweet products of various forms to be candied.

In the following description and in the appended claims, the expression "core coating", on the other hand, is used to indicate any process by means of which the cores are firstly coated with a film of an appropriate coating substance, in liquid or powder form, and then dried to dry the film deposited earlier and form a uniform coating on each core.

### Related art

As is known, core coating is widely used both in the pharmaceutical industry and in the food industry to coat a pharmaceutical active ingredient or a food substance with a suitable coating substance or, on the contrary, to coat a substantially inert substance used as support with an active ingredient.

The core coating operation is typically carried out by means of apparatuses, generally known in the art with the name of coating pans, including a motorised drum, in which the loaded cores in the form of a loose mass are firstly coated with a suitable coating substance in liquid or powder form and then dried by means of the action of a suitable hot drying fluid, in order to consolidate the coating film previously deposited on the cores.

The coating pans are essentially divided in two types according to the characteristics of the motorised drum in which the cores are loaded.

A first type comprises coating pans provided with a drum comprising a hollow body made of integral metal, i.e. without holes, in which the circulation of the hot drying fluid is carried out by means of delivering and sucking devices of such a fluid properly positioned inside the drum and comprising, for example, a pair of suitably perforated hollow tubular elements, which are arranged at an inclined position inside the coating pan and which are partially immersed during use in the mass of products being coated.

In an alternative configuration and as illustrated in Italian patent no. 1 349 836 in the name of the same Applicant, the delivering and sucking devices of the drying fluid comprise respective delivery and suction openings formed at angularly staggered positions on the same manifold body adapted to be housed in the motorised drum at a predetermined distance from the loose mass of cores.

A second type of coating pans comprises apparatuses provided with a drum comprising a substantially cylindrical central portion provided with through holes, wherein the circulation of the hot drying fluid is instead achieved by means of delivering and sucking devices of such a fluid which may be arranged according to the following different configurations with respect to the drum:
i) a first configuration in which both the delivering and sucking devices are positioned outside of the drum; and
ii) a second configuration in which the delivering device is arranged within the drum while the sucking device is positioned outside of the drum.

According to the first of the aforementioned configurations, the delivering and sucking devices usually comprise a pair of box-shaped manifolds, generally positioned on diametrically opposite parts of the aforementioned cylindrical portion of the drum, provided to deliver the drying fluid into the drum and, respectively, to suck such a fluid by means of the aforementioned through holes.

According to the second of the aforementioned configurations, the delivering device of the drying fluid into the drum may comprise a manifold body supported within the drum at a predetermined distance from the perforated substantially cylindrical central portion thereof and provided with at least one delivery opening of the drying fluid and a sucking device for sucking the drying fluid including at least one box-shaped manifold supported outside of the central portion of the drum.

Apparatuses of this kind are disclosed for example in European patent applications EP 0 382 160 and EP 0 717 932.

In the coating pans described above and in order to achieve a uniform movement of the cores to be coated, it is generally foreseen that the drum is equipped with a plurality of mixing blades or baffles which may radially extend along the inner surface of the drum or may be supported by displacing means at a predetermined distance from the central portion of the drum, so as to be movable into and out from the mass of cores to be coated during the coating operations, as illustrated for example by EP 0 382 160.

### Summary of the invention

In relation to the type of coating pans provided with a perforated drum, the Applicant has found that the performance of these apparatuses is affected by a number of drawbacks to which no satisfactory solution has yet been provided.

The Applicant has in particular noted that in coating pans comprising delivering and sucking devices of the hot drying fluid both positioned outside of the drum there are high heat dispersions during the drying process due both to the distance between the delivering and sucking manifolds of the drying fluid (generally positioned, as stated, on diametrically opposite parts of the drum) and to the fact that a substantial amount of the drying fluid (up to 50-60% of the feed flow rate) fed into the drum comes out from the holes made therein before being able to reach and pass through the loose mass of cores basically completely by-passing the latter without being able to deliver its sensible heat.

The Applicant has in particular noted that these undesired heat dispersions trigger at least two additional negative consequences:
i) the need to feed high flow rates of drying fluid inside the drum in order to be in any case able to deliver the heat necessary to dry the coating substance to the mass of cores taking into account the heat dispersions mentioned above, and
ii) an undesired lengthening of the coating time with a further increase of the amount of heat which is underused or not used during the drying operations.

The Applicant has also found that with coating pans comprising delivering and sucking devices of the hot drying fluid both positioned outside of the drum of the prior art it is extremely difficult to coat batches of cores having a low volume with respect to the useful volume, i.e. with respect to the capacity of the drum.

The Applicant, in fact, has noted that in this case the barycentre of the loose mass of cores is positioned towards the lowest part of the drum, i.e. in an area that is only partially crossed by the flow of drying fluid directed from the delivering manifold towards the sucking manifold. This "staggered" positioning of the barycentre of the loose mass of cores with respect to the direction of the flow of drying fluid implies a further worsening of the problems of by-passing the loose mass of cores by the drying fluid with a further and often unacceptable increase of heat dispersions and process times.

Finally, the Applicant has found that this problem is also further worsened in the initial steps of the coating process since the coating substance delivered onto the cores reduces the friction therebetween during mixing further contributing to the "staggering" of the barycentre of the loose mass of cores with respect to the direction of the flow of drying fluid.

In relation to the type of coating pans provided with a perforated drum and with a delivering device of the hot drying fluid positioned within the drum, on the other hand, the Applicant has found that any attempt to increase the efficiency of the coating operations in terms of reducing the overall coating time and the associated costs in terms of energy consumption, faces the problem that any increase in the flow rate of the drying fluid to reduce the total coating time invariably triggers a turbulence increase of the fluid leaving the delivering device which in turn causes unacceptable defects in the coating layer of the cores.

The Applicant has perceived the possibility of achieving substantial improvements in terms of efficiency of the coating operations carried out by means of the coating pans provided with a perforated drum, with or without a delivering device of the hot drying fluid positioned within the drum, both in terms of energy and of process features.

More specifically, the Applicant has found that thanks to the provision inside the drum of a delivering device of the drying fluid provided with specific structural features imparting a high flow directionality and proper fluid dynamic characteristics to the drying fluid to be delivered, it is possible to overcome the energy and technological limitations of coating pans provided with a perforated drum of the prior art.

In particular, the Applicant has found that by adopting specific structural features of such a delivering device of the drying fluid, it is possible to increase the efficiency of the coating operations in terms of a reduction of the overall coating time and of the associated costs in terms of energy consumption maintaining at the same time the required optimal characteristics of the coating film deposited on the cores in terms of constant thickness, uniformity and smoothness.

More specifically, according to a first aspect, the present invention relates to an apparatus for coating cores comprising:
a) a motorised drum for moving a loose mass of said cores including a substantially cylindrical central portion provided with through holes;
b) a ventilation group for circulating a drying fluid in the drum including:
   b1) a delivering device of the drying fluid into the drum comprising a substantially tubular manifold body, supported in said drum at a predetermined distance from said central portion of the drum and peripherally provided with at least one delivery opening of the drying fluid; and
   b2) a sucking device for sucking the drying fluid from the drum including at least one box-shaped manifold supported outside of the central portion of the drum at said central portion;
c) a spraying group for delivering a coating substance onto the mass of cores;
which is characterised in that the delivering device further comprises:
i) a conveying conduit provided with an outlet opening at a free end thereof, said conveying conduit radially extending from said manifold body and being associated to said at least one delivery opening;
ii) a plurality of flow distributing elements each consisting of a respective diverting flap extending at least in part substantially radially in said conveying conduit.

The Applicant has found that thanks to the provision of a delivering device of the drying fluid provided with the combination of features indicated above, it is possible to:
i) exploit up to the maximum extent the sensible heat possessed by the drying fluid since the latter is delivered by an element (the outlet opening of the conveying conduit) positioned at a limited distance from the top free surface of the loose mass of cores during the coating operations, and
ii) deliver the hot drying fluid without turbulence phenomena at a flow rate comparatively higher than that achievable by means of the coating pans disclosed in European patent applications EP 0 382 160 and EP 0 717 932, thereby increasing the efficiency of the coating operations while maintaining at the same time the quality of the coating formed on the cores.

More specifically, the Applicant has found that the aforementioned conveying conduit radially extending from the manifold body advantageously allows to bring the outlet opening of the drying fluid very close to the top free surface of the loose mass of cores, without however interfering with the same and in general with the spraying and coating operations.

At the same time, the conveying conduit allows to deliver the drying fluid with a high directionality along the desired direction, which, as will become clearer hereafter, is preferably substantially perpendicular to the top free surface of the loose mass of cores.

This advantageously limits any lateral dispersions of the drying fluid and allows to exploit in the best way its heat energy (sensible heat) and kinetic energy for the extraction of the solvent vapours from the coating film deposited on the mass of cores, with a remarkable efficiency improvement of the drying step.

Additionally, the Applicant has found that by providing the aforementioned conveying conduit with a plurality of flow distributing elements consisting of respective diverting flaps extending at least in part substantially radially in the conveying conduit, it is possible to achieve a number of advantageous technical effects which help to obtain the desired efficiency increase while maintaining up to the highest standards the quality of the coating deposited on the cores.

These flow distributing elements, in fact, allow to carry out the step of delivering the drying fluid into the drum with high directionality in the radial direction and uniformly distributing the flow of drying fluid along the longitudinal extension of the outlet opening of the conveying conduit reducing to the minimum the phenomena of non-uniform delivery of the drying fluid.

More particularly, the flow distributing elements advantageously reduce to the minimum the possibility that the drying fluid, due to its motion along the longitudinal direction, may leave mainly at the end of the outlet opening of the conveying conduit located downstream with respect to the flow direction.

Also, the Applicant has found that the flow distributing elements (diverting flaps) located and radially extending at least in part in the conveying conduit allow to achieve the following further advantageous technical effects:
i) delivering the drying fluid by directing said fluid towards the top free surface of the loose mass of cores improving the directionality of the flow concentrating the latter on the loose mass of cores avoiding undesired by-passes of fluid, and
ii) adjusting the fluid-dynamic characteristics of such a flow reducing its turbulence in the area immediately upstream of the top free surface of the loose mass of cores and, along therewith, reducing the possibility that part of the drying fluid may laterally by-pass said mass or alter in an undesired way the structure of the coating deposited on the cores.

The coating apparatus of the invention thus allows to increase the heat exchange efficiency and to complete the coating operations in shorter times and with a lesser use of energy with the same useful volume of the drum (i.e. the volume which may actually be occupied by the cores) and with the same mass of cores to be coated with respect to the coating apparatuses provided with a perforated drum of the aforementioned prior art.

The coating apparatus of the invention allows in particular to reduce to the minimum the amount of drying fluid which by-passes the loose mass of cores with an advantageous reduction both of the heat dispersions and of the flow rate of the drying fluid which is actually required to carry out the drying operations.

More particularly, the Applicant has found that the coating apparatus of the invention allows to achieve - with the same useful volume of the drum and with the same mass of cores to be coated - a flow rate reduction of the drying fluid in the order of 50-60% and a reduction of the total time of the coating operations in the order of 30-40% with respect to the known coating pans comprising delivering and sucking devices of the hot drying fluid both positioned outside of the drum.

The Applicant has also found that the coating apparatus of the invention advantageously allows to coat batches of cores having a reduced volume which can be as low as 15-20% of the useful volume of the drum, overcoming one of the technological limitations of coating pans with perforated drum of the prior art and achieving a substantially greater flexibility of use with respect to the latter.

In accordance with a second aspect thereof, the present invention relates to a method for coating cores by means of an apparatus comprising:
- a motorised drum for moving a loose mass of said cores including a substantially cylindrical central portion provided with through holes, said drum defining a housing space for housing said loose mass of cores;
- a ventilation group for circulating a drying fluid in the drum including a delivering device of the drying fluid into the drum comprising:
   i) a substantially tubular manifold body, supported in said drum at a predetermined distance from said central portion of the drum and peripherally provided with at least one delivery opening of the drying fluid;
   ii) a conveying conduit provided with an outlet opening at a free end thereof, said conveying conduit radially extending from said manifold body and being associated to said at least one delivery opening;
   iii) a plurality of flow distributing elements each consisting of a respective diverting flap extending at least in part substantially radially in said conveying conduit;
wherein the method comprises the steps of:
a) delivering a suitable coating substance onto said loose mass of cores; and
b) drying the coating substance delivered onto the loose mass of cores,
   wherein said drying step b) is carried out by means of the steps of:
   b1) delivering a predetermined flow rate of a drying fluid into the drum along a delivering direction substantially perpendicular to the top free surface of said loose mass of cores by means of said delivering device of the drying fluid by distributing the flow of said fluid along the longitudinal extension of the outlet opening of the conveying conduit by means of said plurality of diverting flaps;
      and
   b2) sucking the drying fluid from the drum by means of a sucking device including at least one box-shaped manifold supported outside of the central portion of the drum at said central portion.

The present invention in at least one of the aforementioned aspects may have at least one of the preferred features indicated in the dependent claims 2-8 and 10-15 and, more specifically, at least one of the following preferred features.

In the present description and in the appended claims, except where otherwise indicated, all numerical entities expressing amounts, parameters, percentages, and so forth, are to be understood as being preceded in all instances by the term "about". Also, all ranges of numerical entities include all the possible combinations of the maximum and minimum numerical values and all the possible intermediate ranges therein, in addition to those specifically indicated below.

In a preferred embodiment, the through holes made in the substantially cylindrical central portion of the motorised drum intended to move the loose mass of cores are uniformly distributed throughout substantially the entire extension of said central portion.

In this way, it is advantageously possible to allow the drying fluid to uniformly and diffusely pass through the drum.

In a preferred embodiment, the aforementioned diverting flaps are radially extending throughout the whole radial length of the conveying conduit.

In this way, it is advantageously possible to optimise the aforementioned technical effects, especially flow directionality and flow equalisation along the longitudinal extension of the outlet opening of the conveying conduit, brought about by the diverting flaps.

In a preferred embodiment, the aforementioned outlet opening of the conveying conduit extends substantially parallel to the longitudinal axis of the manifold body for a portion of predetermined length. This advantageously allows to position the outlet opening of the conveying conduit substantially parallel to the mass of cores, so as to span over substantially the entire top free surface of such a mass.

Preferably, the length of the outlet opening of the conveying conduit is comprised between 40 and 75% and, still more preferably, between 50 and 70%, of the total length of the manifold body. This advantageously allows to direct the flow of drying fluid substantially along the entire extension of the loose mass of cores parallel to the longitudinal axis of the drum.

In a preferred embodiment, the cross-sectional area of said outlet opening of the conveying conduit is substantially equal to or greater than the cross-sectional area of the manifold body.

In this way, the speed of the drying fluid coming out from the aforementioned outlet opening is equal to or less than the speed of the drying fluid that flows into the manifold body for which reason it is advantageously possible, if desired, to reduce the speed of the drying fluid by further increasing in this second case the overall efficiency of the process since the drying fluid - suitably slowed down - takes a longer time to pass through the loose mass of cores thus having a longer time to deliver its sensible heat to the cores themselves accelerating the drying process.

Preferably, the speed of the drying fluid can be adjusted - by adjusting the cross-sectional area of the outlet opening of the conveying conduit - so that the speed of the drying fluid coming out from said opening has values comprised between 10 and 30 m/min, more preferably between 18 and 25 m/min.

In a preferred embodiment, the manifold body is rotatably mounted about its longitudinal axis. This advantageously allows to adjust the angular position of the manifold body inside the motorised drum during the different operating steps of the coating process and, in particular, to position the outlet opening of the conveying conduit delivering the drying fluid substantially perpendicular to the top free surface of the mass of cores as a function of both the volume of the loose mass of cores loaded in the drum and of the free flowing properties thereof.

The Applicant has experimentally found that thanks to the aforementioned feature the coating apparatus of the invention advantageously allows to coat batches of cores having a very low volume with respect to the useful volume of the drum (down to 15% of such a useful volume) without however having substantial by-passes of the drying fluid but of the loose mass of cores as it occurs on the contrary in the apparatuses of the prior art with much higher volumes of the mass.

Within the framework of this preferred embodiment, the coating apparatus of the invention preferably comprises an angular positioning device active on the manifold body for adjusting the angular position of said manifold body in the motorised drum. Such an angular positioning device advantageously allows, by means of conventional motor and transmission members known *per se,* to rotate the manifold body about its longitudinal axis and block the same at different angular positions inside said motorised drum, during the different operating steps of the coating process.

In this way, it is thus advantageously possible to adjust the angular position of the manifold body in the drum according to the volume of the loose mass of cores and/or according to the free flowing properties of the cores of said mass both before and during the coating operations.

In a preferred embodiment of the invention, the angular positioning of the manifold body is adjusted so that the longitudinal centre plane of the outlet opening of the conveying conduit forms an angle (α) with respect to a vertical plane passing through the longitudinal axis of the manifold body having a value comprised between 0 and 90°, more preferably, comprised between 5 and 45° and, still more preferably, comprised between 10 and 35°.

In this way, it is thus advantageously possible to position the outlet opening of the conveying conduit delivering the drying fluid substantially perpendicular to the top free surface of the mass of cores during the coating process.

The drying fluid is preferably air; the latter in fact combines cost-effectiveness and easiness of availability with good thermodynamic characteristics, which are advantageous to carry out the drying.

Preferably, the steps of delivering and sucking the drying fluid are carried out so as to keep under vacuum the housing space of the mass of loose cores defined in the motorised drum. In this way, the possibility of emitting possible harmful or polluting substances into the outside environment is advantageously minimised.

The Applicant has experimentally found that thanks to the positioning of the delivering device of the drying fluid inside the drum described above, it is advantageously possible to reduce the vacuum value (meaning the pressure difference with respect to ambient pressure) with respect to that needed by coating pans provided with a perforated drum of the prior art, with an advantageous reduction of the losses of the coating substance.

Thanks to this feature, it is thus possible in a preferred embodiment to carry out the coating method keeping the housing space of the loose mass of cores defined in the drum at a vacuum comprised between 0.1 and 0.5 mbar, more preferably comprised between 0.1 and 0.3 mbar below atmospheric pressure.

### Brief description of the drawings

Additional features and advantages of the invention will be better apparent from the following description of some preferred embodiments thereof, given hereinafter, for illustrating and non-limiting purposes, with reference to the attached drawings. In the drawings:
- figure 1 is a schematic perspective view of an apparatus for coating cores according to the invention, in a typical operating configuration thereof;
- figure 2 is a schematic perspective partial section view of a manifold body forming part of a delivering device of the drying fluid equipping the coating apparatus of figure 1;
- figure 3 is a schematic partial cross-sectional view of the coating apparatus of figure 1.

### Detailed description of the currently preferred embodiments

With reference to the aforementioned figures, an apparatus for coating cores according to a preferred embodiment of the invention, indicated hereafter with the term coating pan, is generally indicated at 1.

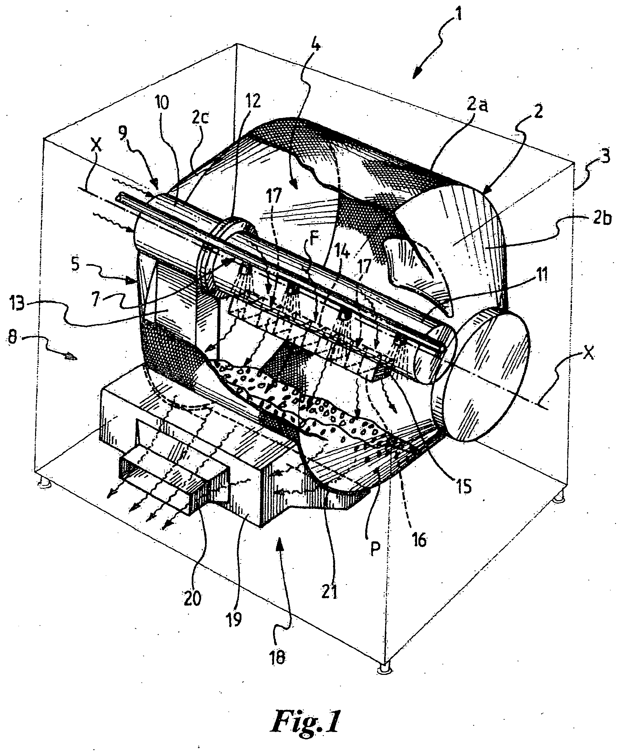

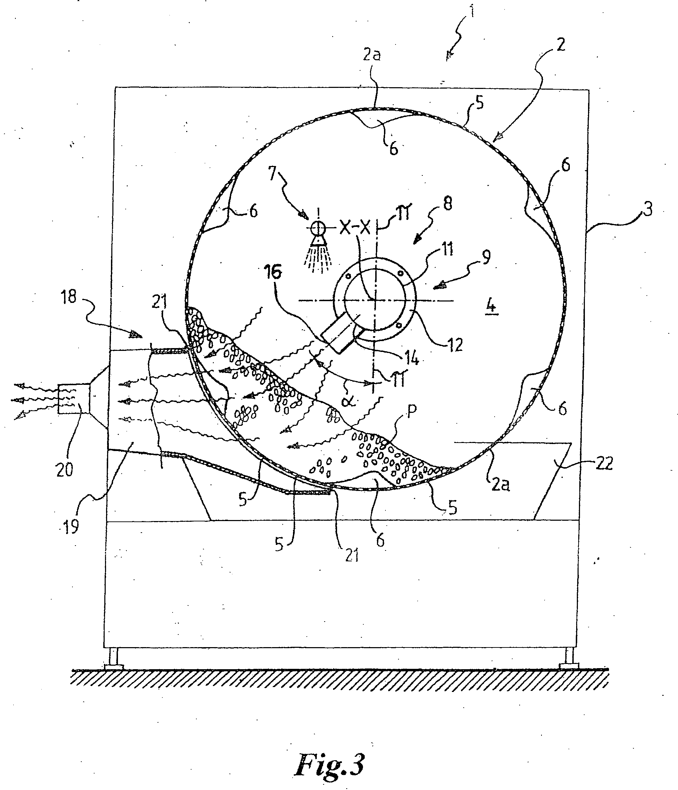

As illustrated in figures 1 and 3, the coating pan 1 comprises a motorised drum 2, conventionally rotatably mounted within a containment casing 3, conventional *per se* and only schematically illustrated here, which is closed in an air-tight manner in a conventional way not illustrated.

In the drum 2 a housing space 4 of a loose mass P of cores to be coated, for example food cores, cores including a pharmaceutical active ingredient or cores consisting of other kinds of substances, is defined.

In the illustrated embodiment, the drum 2 is provided with a longitudinal axis X-X and comprises a substantially cylindrical central portion 2a, connected to opposite essentially frusto-conical side walls 2b, 2c.

The central portion 2a is in turn provided with a plurality of through holes 5 preferably uniformly distributed substantially throughout the entire extension thereof.

The drum 2 is rotated by respective motor means conventional *per se* and not illustrated, for example based on a belt transmission and on a driving device comprising a pair of rollers.

For a more uniform movement of the cores to be coated, the drum 2 is equipped with a plurality of blades or baffles 6, preferably radially extending along the inner surface of the central portion 2a to which they are fixed in a way known *per se* for example by welding or riveting.

In an alternative preferred embodiment, not shown, the baffles 6 may radially extend also or only from the essentially frusto-conical side walls 2b, 2c of the drum according to the mixing configuration that it is desired to achieve.

The coating pan 1 also comprises a spraying group, generally indicated at 7, for delivering onto the mass P of cores a suitable coating substance, for example an aqueous suspension of inert fillers including at least one film-forming substance.

The coating pan 1 comprises a ventilation group 8 for circulating within the drum 2 a drying fluid, for example air, of the solvent (water) of the coating suspension, previously sprayed and deposited in the form of film on the cores of the mass P.

The ventilation group 8 comprises a delivering device 9 of the drying fluid into the drum 2 including in turn a duct 10 for feeding the drying fluid coming from one or more fans (not illustrated) and a substantially tubular manifold body 11, supported within the drum 2 at a predetermined distance from the central portion 2a of the drum 2.

In the preferred embodiment illustrated, the manifold body 11 extends in the drum 2 substantially coaxially to the longitudinal axis X-X of said drum 2. In other configurations of the coating pan 1 and in order to take into account the space occupied by the spraying group 7, the manifold body 11 can be staggered with respect to the longitudinal axis X-X of the drum 2 thereby extending parallel to the longitudinal axis X-X without any appreciable variations in performance of the coating pan 1.

The manifold body 11 is in fluid communication with the duct 10 for feeding drying fluid, to which duct it is preferably removably associated, for example by means of a connecting flange 12.

The duct 10 is supported in turn in a way known *per se* by a base 13 vertically extending within the containment casing 3 and lying on the base of said casing.

The manifold body 11 is peripherally provided with a delivery opening 14, to which a conveying conduit 15 is associated, said conveying conduit 15 radially extending from the manifold body 11 for delivering the flow of the drying fluid with a high directionality in the radial direction.

The conveying conduit 15 is fixed to the manifold body 11 in a conventional manner, for example by welding.

At a radially outer free end of the conveying conduit 15 an outlet opening 16 of the drying fluid into the drum 2 is defined. The outlet opening 16 of the drying fluid from the conveying conduit 15 is therefore in fluid communication with the manifold body 11 and with the feeding duct 10.

In the preferred embodiment illustrated, the cross-sectional areas of the delivery opening 14, of the conveying conduit 15 and of the outlet opening 16, substantially equal to one another, have an area substantially equal to or greater than the cross-sectional area of the manifold body 11.

The delivery opening 14, the outlet opening 16 and the associated conveying conduit 15 extend substantially longitudinally on the manifold body 11 for a portion of predetermined length, for example preferably comprised between about 40 and about 75% and, still more preferably, between about 50 and about 70%, of the total length of the manifold body 11.

Preferably, the cross-sectional area of the delivery opening 14, of the conveying conduit 15 and of the outlet opening 16 is greater than the cross-sectional area of the manifold body 11.

In this way and as will be better apparent in the following, the speed of the drying fluid coming out from the delivery opening 14 and, therefore, from the outlet opening 16 of the conveying conduit 15 is lower than the speed of the drying fluid which flows in the manifold body 11 for which reason it is advantageously possible to increase the overall efficiency of the process since the drying fluid - suitably slowed down - takes a longer time to pass through the loose mass P of cores thus having more time to release its sensible heat to the cores themselves accelerating the drying process.

The conveying conduit 15 is provided with a plurality of flow distributing elements consisting of respective diverting flaps 17 extending substantially radially in the conveying conduit itself throughout its entire radial length for distributing the flow of the drying fluid leaving the conveying conduit 15 with a high directionality in the radial direction and for uniformly distributing the flow of the drying fluid along the longitudinal direction of the outlet opening 16 thereby reducing to the minimum the phenomena of non-uniform delivery of such a fluid.

Preferably, the diverting flaps 17 are pitchwise spaced apart along substantially the entire longitudinal extension of the conveying conduit 15 according to any suitable arrangement adapted to distribute as uniformly as possible the flow of the drying fluid along the longitudinal direction of the outlet opening 16.

Preferably, the manifold body 11 is rotatably mounted about its longitudinal axis (in this case, coinciding with the longitudinal axis X-X of the drum 2) and is angularly positionable so that the longitudinal centre plane of the outlet opening 16 (in this case coinciding with the longitudinal centre plane of the conveying conduit 15 and of the delivery opening 14) with respect to a vertical plane π passing through the longitudinal axis of the manifold body 11 (in this case coinciding with the longitudinal axis X-X of the drum 2) has a value comprised between 0 and 90°, more preferably comprised between 5 and 45° and, still more preferably, comprised between 10 and 35°;

In the preferred embodiment illustrated, the coating pan 1 further comprises an angular positioning device (not shown) active on the manifold body 11 for adjusting the angular position of the manifold body 11 within the drum 2.

The coating pan 1 also comprises a sucking device 18 for sucking the drying fluid from the drum 2 including a box-shaped manifold 19 supported in a way known *per se* outside of the central portion 2a of the drum 2 at the central portion 2a.

The manifold 19 is in fluid communication with a discharge duct 20 of the drying fluid which is in turn in fluid communication, in a way known *per se* not shown, with one or more suction groups provided with fans.

Preferably, the box-shaped manifold 19 is supported in substantial non-pressing contact with the central portion 2a of the drum 2 and it is provided at a peripheral edge with a gasket 21 of a suitable material, for example silicone, intended to reduce friction and reduce lateral leakages of the drying fluid.

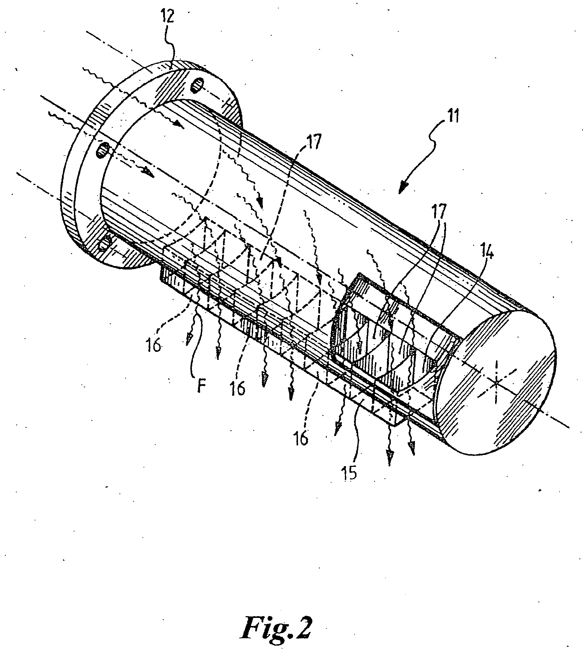

Thanks to the aforementioned configuration of the ventilation group 8, the flowpath of the drying fluid, shown by the arrows in figures 1-3, is schematically the following: feeding duct 10, manifold body 11, delivery opening 14, conveying conduit 15, outlet opening 16, inner space of the drum 2, loose mass P of cores, manifold 19 and discharge duct 20.

Finally, the coating pan 1 comprises a tray 22 positioned below the drum 2 and intended to collect the washing water of the drum used during the cleaning operations of the latter.

With reference to the coating pan 1 described above and to the ventilation group 8 which equips the same, a preferred embodiment of the coating method according to the invention will now be illustrated.

In a preliminary step, the cores are loaded in the form of a loose mass P in the housing space 4 defined within the motorised drum 2 of the coating pan 1 up to a predetermined level so as to occupy the entire useful volume of the drum 2 or a fraction thereof.

Thereafter, the drum 2 is rotated in a way known *per se* by means of the motor means provided for this purpose.

The coating method then provides the step of delivering onto the mass P of cores, by means of the spraying group 7 and in a way known *per se,* a suitable coating substance, in liquid or powder form, which is deposited in the form of a thin film on the cores tumbled by the rotation of the drum 2 and by the baffles 6.

Preferably, the method provides the step of adjusting the angular position of the manifold body 11 of the ventilation group 8 by rotating the latter about its longitudinal axis, along the same direction of rotation of the drum 2, at an angle α such that the delivery opening 14 and, therefore, the outlet opening 16 of the conveying conduit 15 are substantially parallel to the top free surface of the mass P of cores.

This adjustment of the angular position of the manifold body 11 occurs within an angular range defined by the filling characteristics of the housing space 4 of the drum 2 and by the free flowing properties of the cores.

Preferably and as outlined above, the angle α formed by the longitudinal centre plane of the outlet opening 16 with respect to the vertical plane π passing through the longitudinal axis of the manifold body 11 has a value comprised between 0 and 90°, more preferably comprised between 5 and 45° and, still more preferably, comprised between 10 and 35°.

In a step carried out after or simultaneously with the spraying step of the coating solution or powder, a first predetermined flow rate of a suitable drying fluid, preferably air, is fed into the drum 2 by means of the delivery opening 14, the conveying conduit 15 and the outlet opening 16 of the delivery device 9 supported within the drum 2 at a predetermined distance from the top free surface of the loose mass P of cores, along a delivering direction which is highly directional and substantially perpendicular to such a top free surface.

Preferably and thanks to the aforementioned size of the flowing section of the drying fluid defined by the delivery opening 14, by the conveying conduit 15 and by the outlet opening 16, the speed of the drying fluid coming out from the outlet opening 16 of the conveying conduit 15 is lower than the speed of the drying fluid which flows in the manifold body 11.

In this way, it is advantageously possible to further increase the overall efficiency of the process since the drying fluid - suitably slowed down - takes a longer time to pass through the loose mass P of cores thus having more time to deliver its sensible heat to the cores themselves accelerating the drying process.

Preferably, the speed of the drying fluid is adjusted - by adjusting the cross-sectional area of the outlet opening 16 - so that the speed of the drying fluid coming out from said opening has values comprised between 10 and 30 m/min.

Preferably, the aforementioned step of feeding the drying fluid is carried out by distributing the flow of such a fluid along the longitudinal extension of the outlet opening 16 of the conveying conduit 15 by means of the aforementioned diverting flaps 17 radially extending in the conveying conduit 15.

Advantageously, the diverting flaps 17 also allow both to improve the directionality of the flow of drying fluid that is concentrated on the mass P avoiding undesired by-passes, and to adjust the fluid-dynamic characteristics of such a flow reducing its turbulence in the area immediately upstream of the top free surface of the mass P and, along therewith, reducing the possibility that part of the drying fluid may laterally by-pass said mass.

Experimental, test carried out by the Applicant, have shown that this advantageous technical effects of flow directionality and absence of turbulence have been observed with flow rates of the drying fluid substantially exceeding the maximum flow rates which may be used by the coating pans realised according to the teachings of European patent applications EP 0 382 160 and EP 0 717 932 without having turbulence phenomena which affect the quality of the core coating.

According to the invention, in sharp contrast, most of such a first flow rate of drying fluid diffuses through the mass P of cores, carrying out the drying of the coating film already deposited or being deposited thereon without altering its dimensional characteristics. Such a drying fluid comes out from the mass P of cores and from the drum 2 once it has been loaded with the vapours of the solvent used in the coating substance (for example water vapour).

Simultaneously with the step of feeding drying air described above, the suction of a second flow rate of the air which has passed through the mass P of cores by means of the suction manifold 19 and the discharge duct 20 is carried out.

Thanks to the arrangement of the suction manifold 19 outside of the central portion 2a of the drum 2, the air suction takes place at a position substantially aligned with the flow direction of the drying fluid delivered onto the mass P of cores as better illustrated in figures 1 and 3.

The combined delivering and sucking action along the directions defined above, carried out by means of the ventilation group 8, promotes within the drum 2 an optimal circulation of the drying air substantially improving the drying efficiency.

The value of the suction flow rate of the drying air is preferably about 10-25% greater than the value of the delivering flow rate. In this way, it is possible to carry out the steps of delivering and sucking the drying fluid so as to keep under vacuum the housing space 4 of the loose mass P of cores defined in the drum 2 avoiding that vapours or undesired substances may escape into the outside environment of the coating pan 1.

In a preferred embodiment, the housing space 4 of the loose mass P of cores defined in the drum 2 is kept at a vacuum comprised between 0.1 and 0.5 mbar, more preferably comprised between 0.1 and 0.3 mbar below atmospheric pressure with an advantageous loss reduction of the coating substance delivered onto the cores.

In the following examples, provided purely for indicating and non-limiting purposes, the results of some experimental tests carried out by the Applicant will be provided in order to highlight the improved performance of the apparatus and method for coating cores according to the present invention.

### EXAMPLE 1

### (Invention)

A coating pan equipped with a ventilation group 8 according to the preferred embodiment of the present invention illustrated in figures 1-3 was used.

Before and during the coating operations, carried out according to the preferred method illustrated above, a series of parameters shown in the following Table 1 were measured.

### EXAMPLE 2

### (Invention)

The same coating pan of Example 1 was used, which was however loaded with a reduced amount of cores equal to about 16% of the useful volume of the drum.

Before and during the coating operations, carried out according to the preferred method illustrated above, a series of parameters shown in the following Table 1 were measured.

### EXAMPLE 3

### (Comparative)

A comparative coating pan of known type was used, equipped with a ventilation group comprising a pair of box-shaped manifolds, both positioned outside of the drum on diametrically opposite parts of its uniformly perforated cylindrical portion, and intended to deliver the drying fluid in the drum and, respectively, to suck such a fluid by means of the through holes formed in the aforementioned cylindrical portion.

Before and during the coating operations a series of parameters shown in the following Table 1 were measured.

### EXAMPLE 4

### (Comparative)

By way of comparison, an additional test was carried out using a comparative coating pan identical to the coating pan of Example 1 save for the fact that the delivering device 9 was simply provided with a delivery opening 14, without any conveying conduit 15 and any flow distributing elements 17 radially arranged therein, in order to simulate the behaviour of the coating pans realised according to EP 0 382 160.

In the comparative testing, the same process parameters of Example 1 were used save for the fact that the flow rate of the drying air had to be limited to 1,000 m³/h in order to have an acceptable quality of the coating deposited on the cores. The total coating time observed was of about 150 minutes, i.e. comparable to that of Example 3 and much higher than the total coating time of the exemplary coating pan of Example 1 according to the invention.

In order to try to reduce the coating time, the drying air flow rate was increased to the same value of Example 1, i.e. 2000 m³/h, but the at the end of the coating process an unacceptable quality of the coating deposited on the cores was observed.

By considering the experimental parameters shown in the aforementioned Table and the outcome of the comparative testing of Example 4, it is clear that the apparatus and method for coating cores of the present invention allow to substantially improve the efficiency of the coating operations with respect to a coating pan with a perforated drum made according to the prior art both in terms of energy use and in terms of time while obtaining the desired quality of the core coating.

As to the coating pans comprising delivering and sucking devices of the hot drying fluid both positioned outside of the drum, it was in particular experimentally found that - with the same mass of cores loaded into the drum - there was a drastic reduction both in the flow rate of the drying fluid required to carry out the drying operations (flow rate reduction equal to at least 50%) and in the process time (time reduction equal to about 35% in the tests carried out).

As to the coating pans comprising a delivering device of the hot drying fluid positioned inside of the drum, on the other hand, it was in particular experimentally found that - with the same mass of cores loaded into the drum - there was a drastic reduction in the process time with a consequent reduction of the energy requirements for achieving the same kind of coating.

All of this is accompanied by a reduction of the losses of coating substance through the holes of the drum and with substantial maintenance of the amount of coating substance which has been applied to the cores and quality of the final coating film.

Obviously, a man skilled in the art may introduce modifications and variants to the invention disclosed above in order to satisfy specific and contingent application requirements, which modifications and variants fall anyhow within the scope of protection as is defined by the following claims.

**TABLE 1**

| Parameters | Example 1 (Invention) | Example 2 (Invention) | Example 3 (Comparison) |
|---|---|---|---|
| Useful volume of the coating apparatus (litres) | 350 | 350 | 250 |
| Mass of loaded cores (kg) | 205 | 56 | 200 |
| Drum rotation speed (rev/min) | 9 | 7 | 7.7 |
| No. Mixing baffles | 6 | 6 | 6 |
| Cores mass temperature (°C) | 43-46 | 43-46 | 39-41 |
| Heating time of the cores to the process temperature (min) | 7 | 7 | 15 |
| Vacuum value in the drum (mbar) | 0.1 | 0.2 | 0.5 |
| Coating substance | OPADRY® II | OPADRY® II | OPADRY® II |
| Total mass of coating substance delivered (g) | 53600 | 14600 | 57600 |
| Average flow rate of coating substance (g/min) | 530 | 169 | 350 |
| Maximum flow rate of coating substance (g/min) | 650 | 175 | 440 |
| Number of spray guns | 6 | 4 | 4 |
| Atomisation air pressure (bar) | 3 | 3 | 2.7 |
| Drying air flow rate (m³/h) | 2.000 | 1.500 | 4.000-4.500 |
| Drying air temperature (°C) | 75 | 75 | 70-75 |
| Process loss (% by weight) | 2 | 6 | 9 |
| Initial core diameter (mm) | 11.5 | 11.5 | 10 |
| Initial core weight (mg) | 507 | 507 | 450 |
| Final core weight (mg) | 519,98 | 519,43 | 461.79 |
| Increase of core weight (% by weight) | 2,56 | 2,45 | 2.62 |
| Total time of coating process (min) | 101 | 99 | 154 |

| | | | |
|---|---|---|---|
| OPADRY® II = aqueous suspension having a total solid content of 11.75% by weight in the case of examples 1 and 2 (invention) and of 11.50% by weight in the case of example 3 (comparative) commercially available from Colorcon, S.r.l., Gallarate, Italy. Process loss = percentage by weight of the coating substance which leaves from the holes of the drum without passing through the loose mass of cores. | | | |

## Claims

1. Apparatus (1) for coating cores comprising:
a) a motorised drum (2) for moving a loose mass (P) of said cores including a substantially cylindrical central portion (2a) provided with through holes (5);
b) a ventilation group (8) for circulating a drying fluid in the drum (2) including;
b1) a delivering device (9) of the drying fluid into the drum (2) comprising a substantially tubular manifold body (11), supported in said drum (2) at a predetermined distance from said central portion (2a) of the drum (2) and peripherally provided with at least one delivery opening (14) of the drying fluid; and
b2) a sucking device (18) for sucking the drying fluid from the drum (2) including at least one box-shaped manifold (19) supported outside of the central portion (2a) of the drum (2) at said central portion (2a);
c) a spraying group (7) for delivering a coating substance onto the mass (P) of cores;
**characterised in that** the delivering device (9) further comprises:
i) a conveying conduit (15) provided with an outlet opening (16) at a free end thereof, said conveying conduit (15) radially extending from said manifold body (11) and being associated to said at least one delivery opening (14);
ii) a plurality of flow distributing elements each consisting of a respective diverting flap (17) extending at least in part substantially radially in said conveying conduit (15),

2. Apparatus (1) according to claim 1, wherein said through holes (5) are uniformly distributed throughout substantially the entire extension of said central portion (2a) of the drum (2).

3. Apparatus (1) according to claim 1, wherein said outlet opening (16) of the conveying conduit (15) extends substantially parallel to the longitudinal axis (X-X) of said manifold body (11) for a portion of predetermined length.

4. Apparatus (1) according to claim 3, wherein said outlet opening (16) of the conveying conduit (15) has a length comprised between about 40% and about 75% of the total length of the manifold body (11).

5. Apparatus (1) according to claim 1, wherein the cross-sectional area of said outlet opening (16) of the conveying conduit (15) is equal to or greater than the cross-sectional area of said manifold body (11).

6. Apparatus (1) according to any one of the preceding claims, wherein said manifold body (11) is rotatably mounted about its longitudinal axis.

7. Apparatus (1) according to claim 6, comprising an angular positioning device active on said manifold body (11) for adjusting the angular position of said manifold body (11) in said drum (2).

8. Apparatus (1) according to claim 6, wherein said manifold body (11) is angularly positionable so that the longitudinal centre plane of said outlet opening (16) forms an angle (α) with respect to a vertical plane passing through the longitudinal axis of the manifold body (11) having a value comprised between 0° and 90°, more preferably, between 5° and 45° and, still more preferably, between 10° and 35°.

9. Method for coating cores by means of an apparatus (1) comprising:
- a motorised drum (2) for moving a loose mass (P) of said cores including a substantially cylindrical central portion (2a) provided with through holes (5), said drum (2) defining a housing space (4) for housing said loose mass (P) of cores;
- a ventilation group (8) for circulating a drying fluid in the drum (2) including a delivering device (9) of the drying fluid into the drum (2) comprising:
i) a substantially tubular manifold body (11), supported in said drum (2) at a predetermined distance from said central portion (2a) of the drum (2) and peripherally provided with at least one delivery opening (14) of the drying fluid;
ii) a conveying conduit (15) provided with an outlet opening (16) at a free end thereof, said conveying conduit (15) radially extending from said manifold body (11) and being associated to said at least one delivery opening (14);
iii) a plurality of flow distributing elements each consisting of a respective diverting flap (17) extending at least in part substantially radially in said conveying conduit (15);
wherein the method comprises the steps of:
a) delivering a suitable coating substance onto said loose mass (P) of cores; and
b) drying the coating substance delivered onto the loose mass (P) of cores,
wherein said drying step b) is carried out by means of the steps of:
b1) delivering a predetermined flow rate of a drying fluid into the drum (2) along a delivering direction substantially perpendicular to the top free surface of said loose mass (P) of cores by means of said delivering device (9) of the drying fluid by distributing the flow of said fluid along the longitudinal extension of the outlet opening (16) of the conveying conduit (15) by means of said plurality of diverting flaps (17);
and
b2) sucking the drying fluid from the drum (2) by means of a sucking device (18) including at least one box-shaped manifold (19) supported outside of the central portion (2a) of the drum (2) at said central portion (2a).

10. Method according to claim 9, wherein the speed of the drying fluid leaving said outlet opening (16) of the conveying conduit (15) is equal to or less than the speed of the drying fluid flowing in the manifold body (11).

11. Method according to claim 10, wherein the speed of the drying fluid leaving said outlet opening (16) of the conveying conduit (15) is between 10 and 30 m/min.

12. Method according to claim 9, further comprising the step of adjusting the angular position of said manifold body (11) in the drum (2) according to the volume of the loose mass (P) of cores and/or according to the free-flowing characteristics of the cores of said mass (P).

13. Method according to claims 12, wherein said step of adjusting the angular position of the manifold body (11) is carried out such that the longitudinal centre plane of said outlet opening (16) of the conveying conduit (15) forms an angle (α) with respect to a vertical plane (π) passing through the longitudinal axis of the manifold body (11) having a value comprised between 0° and 90°, more preferably between 5° and 45° and, still more preferably, between 10° and 35°.

14. Method according to claim 9, wherein said steps of delivering and sucking the drying fluid are carried out so as to keep under vacuum the housing space (4) of the loose mass (P) of cores defined in said drum (2).

15. Method according to claim 14, wherein the housing space (4) of the loose mass (P) of cores defined in said drum (2) is kept at a vacuum of between 0.1 and 0.5 mbar, more preferably between 0.1 and 0.3 mbar below atmospheric pressure.

## Patentansprüche

1. Vorrichtung (1) zur Beschichtung von Kernen, umfassend:
a) eine motorbetriebene Trommel (2) zum Bewegen einer losen Masse (P) von Kernen, aufweisend einen im Wesentlichen zylinderförmigen, zentralen Abschnitt (2a), der mit Durchgangslöchern (5) versehen ist;
b) eine Belüftungsgruppe (8) zum Umwälzen eines Trocknungsfluids in der Trommel (2), aufweisend:
b1) eine Vorrichtung (9) zur Ausgabe des Trocknungsfluids in die Trommel (2), umfassend einen im Wesentlichen rohrförmigen Verteilerkörper (11), der in der Trommel (2) in einem vorgegebenen Abstand von dem zentralen Abschnitt (2a) der Trommel (2) gelagert ist und am Umfang mit wenigstens einer Öffnung (14) zur Ausgabe des Trocknungsfluids versehen ist; und
b2) eine Ansaugvorrichtung (18) zum Ansaugen des Trocknungsfluids aus der Trommel (2), aufweisend wenigstens einen kastenförmigen Verteiler (19), der außerhalb des zentralen Abschnitts (2a) der Trommel (2) an dem zentralen Abschnitt (2a) gelagert ist;
c) eine Sprühgruppe (7) zum Ausgeben eines Beschichtungsstoffes auf die Masse (P) von Kernen; **dadurch gekennzeichnet, dass** die Ausgabevorrichtung (9) ferner Folgendes umfasst:
i) eine Förderleitung (15), die an einem freien Ende mit einer Auslassöffnung (16) versehen ist, wobei die Förderleitung (15) sich radial aus dem Verteilerkörper (11) erstreckt und mit wenigstens einer Ausgabeöffnung (14) verbunden ist;
ii) eine Mehrzahl von Strömungsverteilungselementen, jeweils bestehend aus einer Umlenkklappe (17), die sich wenigstens teilweise im Wesentlichen radial in die Förderleitung (15) erstreckt.

2. Vorrichtung (1) nach Anspruch 1, wobei die Durchgangslöcher (5) gleichmäßig über die im Wesentlichen gesamte Ausdehnung des zentralen Abschnitts (2a) der Trommel (2) hinweg verteilt sind.

3. Vorrichtung (1) nach Anspruch 1, wobei die Auslassöffnung (16) der Förderleitung (15) sich im Wesentlichen parallel zur Längsachse (X-X) des Verteilerkörpers (11) über einen Abschnitt vorgegebener Länge erstreckt.

4. Vorrichtung (1) nach Anspruch 3, wobei die Auslassöffnung (16) der Förderleitung (15) eine Länge aufweist, die im Bereich zwischen ungefähr 40 % und ungefähr 75 % der Gesamtlänge des Verteilerkörpers (11) liegt.

5. Vorrichtung (1) nach Anspruch 1, wobei die Querschnittsfläche der Auslassöffnung (16) der Förderleitung (15) gleich oder größer als die Querschnittsfläche des Verteilerkörpers (11) ist.

6. Vorrichtung (1) nach einem der vorstehenden Ansprüche, wobei der Verteilerkörper (11) um seine Längsachse drehbar eingebaut ist.

7. Vorrichtung (1) nach Anspruch 6, umfassend eine Einrichtung zur Winkeleinstellung, die auf den Verteilerkörper (11) wirkt, um die Winkelstellung des Verteilerkörpers (11) in der Trommel (2) einzustellen.

8. Vorrichtung (1) nach Anspruch 6, wobei der Verteilerkörper (11) winkeleinstellbar ist, derart, dass die Längsmittelebene der Auslassöffnung (16) einen Winkel (α) in Bezug auf eine vertikale Ebene bildet, die durch die Längsachse des Verteilerkörpers (11) hindurchgeht und einen Wert zwischen 0° und 90°, vorzugsweise zwischen 5° und 45° und noch weiter bevorzugt zwischen 10° und 35° aufweist.

9. Verfahren zur Beschichtung von Kernen mittels einer Vorrichtung (1), umfassend:
- eine motorbetriebene Trommel (2) zum Bewegen einer losen Masse (P) von Kernen, die einen im Wesentlichen zylinderförmigen zentralen Abschnitt (2a) aufweist, der mit Durchgangslöchern (5) versehen ist, wobei die Trommel (2) einen Aufnahmeraum (4) zur Aufnahme der losen Masse (P) von Kernen definiert;
- eine Belüftungsgruppe (8) zum Umwälzen eines Trocknungsfluids in der Trommel (2), aufweisend eine Vorrichtung (9) zur Ausgabe des Trocknungsfluids in die Trommel (2), umfassend:
i) einen im Wesentlichen rohrförmigen Verteilerkörper (11), der in der Trommel (2) in einem vorgegebenen Abstand von dem zentralen Abschnitt (2a) der Trommel (2) gelagert ist und am Umfang mit wenigstens einer Öffnung (14) zur Ausgabe des Trocknungsfluids versehen ist;
ii) eine Förderleitung (15), die an einem freien Ende mit einer Auslassöffnung (16) versehen ist, wobei die Förderleitung (15) sich radial aus dem Verteilerkörper (11) erstreckt und mit wenigstens einer Ausgabeöffnung (14) verbunden ist;
iii) eine Mehrzahl von Strömungsverteilungselementen, jeweils bestehend aus einer Umlenkklappe (17), die sich wenigstens teilweise im Wesentlichen radial in die Förderleitung (15) erstreckt;
wobei das Verfahren folgende Schritte umfasst:
A) Ausgeben eines geeigneten Beschichtungsstoffes auf die lose Masse (P) von Kernen; und
b) Trocknen des auf die lose Masse (P) von Kernen ausgegebenen Beschichtungsstoffes,
wobei der Trocknungsschritt b) mittels folgender Schritte ausgeführt wird:
b1) Ausgeben eines Trocknungsfluids mit einer vorgegebenen Strömungsgeschwindigkeit in die Trommel (2) längs einer Ausgaberichtung, die im Wesentlichen senkrecht zur oberen freien Fläche der losen Masse (P) von Kernen verläuft, mittels der Vorrichtung (9) zur Ausgabe des Trocknungsfluids durch Verteilen der Strömung des Fluids längs der Längenausdehnung der Auslassöffnung (16) der Förderleitung (15) mittels der Mehrzahl von Umlenkklappen (17);
und
b2) Ansaugen des Trocknungsfluids aus der Trommel (2) mittels einer Ansaugvorrichtung (18), aufweisend wenigstens einen kastenförmigen Verteiler (19), der außerhalb des zentralen Abschnitts (2a) der Trommel (2) an dem zentralen Abschnitt (2a) gelagert ist.

10. Verfahren nach Anspruch 9, wobei die Geschwindigkeit des Trocknungsfluids, das die Auslassöffnung (16) der Förderleitung (15) verlässt, gleich oder kleiner als die Geschwindigkeit des Trocknungsfluids ist, das in dem Verteilerkörper (11) fließt.

11. Verfahren nach Anspruch 10, wobei die Geschwindigkeit des Trocknungsfluids, das die Auslassöffnung (16) der Förderleitung (15) verlässt, zwischen 10 und 30 m/min beträgt.

12. Verfahren nach Anspruch 9, ferner umfassend den Schritt zum Einstellen der Winkelstellung des Verteilerkörpers (11) in der Trommel (2) entsprechend dem Volumen der losen Masse (P) von Kernen und/oder je nach der Rieselfähigkeit der Kerne der Masse (P).

13. Verfahren nach Anspruch 12, wobei der Schritt des Einstellens der Winkelstellung des Verteilerkörpers (11) derart ausgeführt wird, dass die Längsmittelebene der Auslassöffnung (16) der Förderleitung (15) einen Winkel (α) in Bezug auf eine vertikale Ebene (*π*) bildet, die durch die Längsachse des Verteilerkörpers (11) hindurchgeht und einen Wert zwischen 0° und 90°, vorzugsweise zwischen 5° und 45° und noch weiter bevorzugt zwischen 10° und 35° aufweist.

14. Verfahren nach Anspruch 9, wobei die Schritte des Ausgebens und des Ansaugens des Trocknungsfluids derart ausgeführt werden, dass der Aufnahmeraum (4) der losen Masse (P) von Kernen, der in der Trommel (2) definiert ist, unter Vakuum gehalten wird.

15. Verfahren nach Anspruch 14, wobei der Aufnahmeraum (4) der losen Masse (P) von Kernen, der in der Trommel (2) definiert ist, in einem Vakuum zwischen 0,1 und 0,5 mbar, vorzugsweise zwischen 0,1 und 0,3 mbar unterhalb des Atmosphärendrucks gehalten wird.

## Revendications

1. Appareil (1) de revêtement de granules comprenant :
a) un tambour motorisé (2) pour mettre en mouvement une masse libre (P) desdits granules comprenant une partie centrale sensiblement cylindrique (2a) munie de trous passants (5) ;
b) un groupe de ventilation (8) pour faire circuler un fluide de séchage dans le tambour (2) comprenant :
b1) un dispositif de distribution (9) du fluide de séchage dans le tambour (2) comprenant un corps de collecteur sensiblement tubulaire (11), supporté dans ledit tambour (2) à une distance prédéterminée de ladite partie centrale (2a) du tambour (2) et munie à la périphérie d'au moins une ouverture de distribution (14) du fluide de séchage ; et
b2) un dispositif d'aspiration (18) pour aspirer le fluide de séchage à partir du tambour (2) comprenant au moins un collecteur en forme de caisson (19) supporté à l'extérieur de la partie centrale (2a) du tambour (2) au niveau de ladite partie centrale (2a) ;
c) un groupe de pulvérisation (7) pour distribuer une substance de revêtement sur la masse (P) de granules ;
**caractérisé en ce que** le dispositif de distribution (9) comprend en outre :
i) une conduite de transport (15) munie d'une ouverture de sortie (16) à une extrémité libre de celle-ci, ladite conduite de transport (15) s'étendant radialement à partir dudit corps de collecteur (11) et étant associée à ladite au moins une ouverture de distribution (14) ;
ii) une pluralité d'éléments de distribution de flux constitués chacun d'un volet déviateur respectif (17) s'étendant au moins en partie sensiblement radialement dans ladite conduite de transport (15).

2. Appareil (1) selon la revendication 1, dans lequel lesdits trous passants (5) sont distribués uniformément sensiblement sur toute l'extension de ladite partie centrale (2a) du tambour (2).

3. Appareil (1) selon la revendication 1, dans lequel ladite ouverture de sortie (16) de la conduite de transport (15) s'étend sensiblement parallèlement à l'axe longitudinal (X-X) dudit corps de collecteur (11) sur une portion de longueur prédéterminée.

4. Appareil (1) selon la revendication 3, dans lequel ladite ouverture de sortie (16) de la conduite de transport (15) a une longueur comprise entre environ 40% et environ 75% de la longueur totale du corps de collecteur (11).

5. Appareil (1) selon la revendication 1, dans lequel la section transversale de ladite ouverture de sortie (16) de la conduite de transport (15) est égale ou supérieure à la section transversale dudit corps de collecteur (11).

6. Appareil (1) selon l'une quelconque des revendications précédentes, dans lequel ledit corps de collecteur (11) est monté de manière rotative autour de son axe longitudinal.

7. Appareil (1) selon la revendication 6, comprenant un dispositif de positionnement angulaire agissant sur ledit corps de collecteur (11) pour régler la position angulaire dudit corps de collecteur (11) dans ledit tambour (2).

8. Appareil (1) selon la revendication 6, dans lequel ledit corps de collecteur (11) peut être positionné angulairement de manière que le plan central longitudinal de ladite ouverture de sortie (16) forme un angle (α), par rapport à un plan vertical coupant l'axe longitudinal du corps de collecteur (11), ayant une valeur comprise entre 0° et 90°, de préférence entre 5° et 45° et, de manière davantage préférée, entre 10° et 35°.

9. Procédé pour le revêtement de granules au moyen d'un appareil (1) comprenant :
- un tambour motorisé (2) pour mettre en mouvement une masse libre (P) desdits granules comprenant une partie centrale sensiblement cylindrique (2a) munie de trous passants (5), ledit tambour (2) définissant un espace de logement (4) pour loger ladite masse libre (P) de granules ;
- un groupe de ventilation (8) pour faire circuler un fluide de séchage dans le tambour (2) comprenant un dispositif de distribution (9) du fluide de séchage dans le tambour (2) comprenant :
i) un corps de collecteur sensiblement tubulaire (11), supporté dans ledit tambour (2) à une distance prédéterminée de ladite partie centrale (2a) du tambour (2) et munie à la périphérie d'au moins une ouverture de distribution (14) du fluide de séchage ;
ii) une conduite de transport (15) munie d'une ouverture de sortie (16) à une extrémité libre de celle-ci, ladite conduite de transport (15) s'étendant radialement à partir dudit corps de collecteur (11) et étant associée à ladite au moins une ouverture de distribution (14) ;
iii) une pluralité d'éléments de distribution de flux constitués chacun d'un volet déviateur respectif (17) s'étendant au moins en partie sensiblement radialement dans ladite conduite de transport (15) ;
dans lequel le procédé comprend les étapes suivantes :
a) la distribution d'une substance de revêtement appropriée sur ladite masse libre (P) de granules ; et
b) le séchage de la substance de revêtement distribuée sur la masse libre (P) de granules,
dans lequel ladite étape de séchage b) est exécutée au moyen des étapes suivantes :
b1) la distribution à un débit prédéterminé d'un fluide de séchage dans le tambour (2) suivant une direction de distribution sensiblement perpendiculaire à la surface supérieure libre de ladite masse libre (P) de granules au moyen dudit dispositif de distribution (9) du fluide de séchage en distribuant le flux dudit fluide le long de l'extension longitudinale de l'ouverture de sortie (16) de la conduite de transport (15) au moyen de ladite pluralité de volets déviateurs (17) ;
et
b2) l'aspiration du fluide de séchage à partir du tambour (2) au moyen d'un dispositif d'aspiration (18) comprenant au moins un collecteur en forme de caisson (19) supporté à l'extérieur de la partie centrale (2a) du tambour (2) au niveau de ladite partie centrale (2a).

10. Procédé selon la revendication 9, dans lequel la vitesse du fluide de séchage quittant ladite ouverture de sortie (16) de la conduite de transport (15) est égale ou inférieure à la vitesse du fluide de séchage circulant dans le corps de collecteur (11).

11. Procédé selon la revendication 10, dans lequel la vitesse du fluide de séchage quittant ladite ouverture de sortie (16) de la conduite de transport (15) est comprise entre 10 et 30 m/min.

12. Procédé selon la revendication 9, comprenant en outre l'étape de réglage de la position angulaire dudit corps de collecteur (11) dans le tambour (2) en fonction du volume de la masse libre (P) de granules et/ou en fonction des caractéristiques de libre circulation des granules de ladite masse (P).

13. Procédé selon la revendication 12, dans lequel ladite étape de réglage de la position angulaire du corps de collecteur (11) est exécutée de manière que le plan central longitudinal de ladite ouverture de sortie (16) de la conduite de transport (15) forme un angle (α), par rapport à un plan vertical (*π*) coupant l'axe longitudinal du corps de collecteur (11), ayant une valeur comprise entre 0° et 90°, de préférence entre 5° et 45° et, de manière davantage préférée, entre 10° et 35°.

14. Procédé selon la revendication 9, dans lequel lesdites étapes de distribution et d'aspiration du fluide de séchage sont exécutées de manière à maintenir sous vide l'espace de logement (4) de la masse libre (P) de granules définie dans ledit tambour (2).

15. Procédé selon la revendication 14, dans lequel l'espace de logement (4) de la masse libre (P) de granules définie dans ledit tambour (2) est maintenu à un degré de vide compris entre 0,1 et 0,5 mbar, de préférence entre 0,1 et 0,3 mbar au-dessous de la pression atmosphérique.
